# EUROPÄISCHE PATENTSCHRIFT

(11) **EP 3 619 036 B1**
(45) Veröffentlichungstag und Bekanntmachung des Hinweises auf die Patenterteilung: **04.11.2026**
(21) Anmeldenummer: 18726735.6
(22) Anmeldetag: 03.05.2018
(51) Int. Cl.: B32B 5/02, B32B 7/12, B32B 29/00, B32B 29/02, B65D 85/804

(54) **DECKELFOLIE ZUM VERSCHLIESSEN VON BECHERARTIGEN BEHÄLTNISSEN**
COVER FILM FOR CLOSING OF CUP TYPE CONTAINERS
FILM D'OPERCULAGE DESTINÉ À FERMER DES RÉCIPIENTS EN FORME DE GOBELET

(30) Priorität: 03.05.2017 EP 17169354
(43) Veröffentlichungstag der Anmeldung: 11.03.2020
(73) Patentinhaber: Jura-Plast GmbH, 91244 Reichenschwand (DE)
(72) Erfinder: MÜLLER, Herbert Jürgen, 91230 Happurg/Förrenbach (DE)
(74) Vertreter: Simandi, Claus
(86) Internationale Anmeldenummer: PCT/EP2018/061443
(87) Internationale Veröffentlichungsnummer: WO 2018/202821

(56) Entgegenhaltungen:
- WO-A1-03/073896
- WO-A1-2010/137952
- WO-A1-2011/015973
- WO-A1-2014/126463
- WO-A1-2016/198534
- WO-A1-2017/063680
- WO-A1-2017/187024
- WO-A2-2015/177591
- DE-A1- 4 011 299
- PAUL E. KELLER ET AL: "Water Vapor Permeation in Plastics", USDOE; DEPT. OF HOMELAND SECURITY (DHS) (UNITED STATES), 1 January 2017 (2017-01-01), pages 1 - 37, XP055753040, Retrieved from the Internet <URL:https://www.pnnl.gov/main/publications/external/technical_reports/PNNL-26070.pdf> [retrieved on 20201123], DOI: 10.2172/1411940

## Beschreibung

Die vorliegende Erfindung betrifft eine Deckelfolie zum Verschließen von becherartigen Behältnissen wie z. B. Schalen, schüsselartigen Behältnissen oder insbesondere Kapseln, wobei die Deckelfolie aus einem biologisch abbaubaren Material hergestellt ist.

Weit verbreitet sind Kapseln zum portionsweisen Aufbrühen von Getränken wie Kaffee oder Tee. Die Kapseln bestehen aus einem becherartigen Grundkörper und einer Deckelfolie, die den Grundkörper fest verschließt. Die Kapseln sind dafür ausgebildet, mit der Deckelfolie nach unten in einen entsprechenden Zubereitungsautomaten eingelegt zu werden. Für die Zubereitung wird die Kapsel mit Deckelfolie gegen eine strukturierte, z. B. pyramidenförmige Platte gedrückt und von oben von einer Einstichnadel durchstochen. In dem Automaten zubereitetes, heißes Wasser wird mit hohem Druck von oben in die Kapsel gepresst, wobei die Deckelfolie gegen die strukturierte Platte gedrückt wird und sobald der Druck hoch genug ist, aufplatzt. Das heiße Getränk, z. B. gebrühter Kaffee, kann nun durch den Riss in der Deckelfolie und die Löcher der strukturierten Platte ausfließen.

Herkömmlicherweise bestehen die Kapseln, Grundkörper wie Deckelfolie, aus Aluminium um den Inhalt vor Aromaverlusten, z. B. aufgrund von Sauerstoffeintritt, zu schützen. Da Kapseln aus Aluminium nicht kompostierbar sind, fällt eine enorme Menge an Abfall an, der in Regel im Restmüll entsorgt wird. Damit geht der hohe Energieaufwand, der für die Produktion der Aluminiumkapseln erforderlich ist, verloren.

Ein weiterer Nachteil von Kapseln mit Deckelfolie aus Aluminium ist, dass beim Aufplatzen der Deckelfolie während des Brühvorgangs winzige Aluminiumsplitter entstehen können, die in das gebrühte Getränk eingetragen werden.

Mittlerweile sind auch Kapseln bekannt, die einen Grundkörper aus einem biologisch abbaubaren Kunststoff oder dergleichen Material haben. Jedoch verwenden auch diese Kapseln in der Regel als Deckelfolie Aluminium. Die nicht kompostierbare Aluminium-Deckelfolie landet somit wiederum im Restmüll mit den vorstehend genannten Problemen.

Weiter haben auch diese Kapseln den Nachteil, dass beim Aufplatzen der Deckfolie aus Aluminium während des Brühvorgangs winzige Aluminiumsplitter in das gebrühte Getränk eingetragen werden können.

Es war daher Aufgabe der vorliegenden Erfindung eine Deckelfolie aus einem biologisch abbaubaren Material bereitzustellen, die zum Verschließen von Behältnissen mit becherartigem Grundkörper wie z. B. Schalen, Kapseln oder schüsselartigen Behältnissen geeignet ist, und die vorgehend genannten Probleme nicht aufweist.

WO2017/063680A1 offenbart eine biologisch abbaubare Deckelfolie für becherartige Behältnisse wobei die biologisch abbaubare Deckelfolie eine Schicht aus Papier und eine Schicht aus PLA umfasst wobei die Deckelfolie eine PVOH Schicht und eine Celluloseschicht umfasst. Die PLA Schicht wird lokal verdünnt mittels eines Infrarotlasers.

Erfindungsgemäß wird eine Deckelfolie vorgesehen, wobei die Deckelfolie in dieser Reihenfolge i.) eine Schicht aus Papier, wobei die freie Oberseite und/oder Unterseite der Schicht aus Papier eine Barriereschicht für Sauerstoff und Wasserdampf aufweist, oder wobei die Schicht aus Papier eine Barrierefunktion aufweist; ii.) und mindestens eine Schicht aus einem Vlies ist, wobei das Vlies aus einem biologisch abbaubaren Material hergestellt ist, und, wobei das biologisch abbaubare Material ein Kunststoff ist, wobei die Deckelfolie mit einer Barrierefunktion für Sauerstoff und Wasserdampf ausgerüstet ist.

Weiter betrifft die vorliegende Erfindung becherartige Behältnisse, insbesondere für Lebensmittel, wie z. B. Schalen, schüsselartige Behältnisse und insbesondere Getränkekapseln, die aus biologisch abbaubaren Material hergestellt sind, mit der erfindungsgemäßen Deckelfolie.

Das biologisch abbaubare Material für das Vlies wird auf einem abbaubaren Kunststoff hergestellt.
Beispiele für biologisch abbaubare Kunststoffe sind Biopolymere, wie Polymilchsäure (PLA), modifizierte Polymilchsäure, Polymilchsäure-Copolymere, Polyhydroxyalkanoate (PHA), Polycaprolacton (PCL),

Beispiele für PLA-Copolymere sind Copolymere mit Polyestern, z. B. aliphatischen Polyestern (CPLA). Weitere Beispiele sind Kombinationen aus PLA-Fasern mit Papier sowie Naturfasern mit Schlichte.

Bevorzugt sind Polylactid und biologisch abbaubare Kunststoffe auf Polylactidbasis, wie modifiziertes Polylactid, Polylactid-Copolymere, Alpha-Hydroxysäuren wie z. B. Poly-(Lactid-co-Glykolid) (PLGA), Polyanhydride, aliphatische Polyester, Copolyester mit aliphatischen und aromatischen Blöcken, Polyesteramid, Polyesterurethan, ein Polyethylenoxidpolymer, ein Polyglycol und Copolymere davon.

Ein biologisch abbaubarer Kunststoff ist insbesondere ein kompostierbarer Kunststoff gemäß der Europäischen Norm (EN) 13432.

Weiterhin ist bevorzugt, dass das Vlies aus einem biologisch abbaubaren Material, insbesondere in den vorgenannten bevorzugten Ausführungsformen eine Grammatur zwischen 15 und 35 Gramm aufweist.

Das erfindungsgemäße Vlies verhindert besonders vorteilhaft den Ausfluss von z.B. Kaffeepulver beim Durchtreten des Brühwassers durch die fixierte Kapsel, beispielsweise in einem Zubereitungsautomaten, wie oben beschrieben.

Die Schicht aus Papier bildet die nach Außen weisende Schicht der erfindungsgemäßen Deckelfolie. Zum Schutz des Inhalts des Behältnisses ist sie vorzugsweise mit Barriereeigenschaften für Sauerstoff und Wasserdampf ausgerüstet. Hierfür können die Oberseite und/oder die Unterseite der Papierschicht mit einer Barriereschicht versehen sein. Beispielsweise kann die nach Außen weisende Oberseite der Papierschicht mit einer Barriereschicht versehen sein. Prinzipiell kann hierfür jede bekannte Barriereschicht mit geeigneter Sperrwirkung für Sauerstoff und Wasserdampf eingesetzt werden.

Beispiele für geeignete Barriereschichten sind Schichten aus Barriere-Kunststoffen wie z. B. Ethylenvinylalkohole (EVOH), Polyethylen niederer Dichte (PE-LD) oder eine biaxial orientierte Polypropylen-Folie (BOPP). Eine Sauerstoffbarrierefunktion der Papierschicht kann z. B. auch durch Hochdruckverpressen der Papierfasern erreicht werden. Diese kann dann bei Bedarf durch Aufbringen einer Wasserdampfbarriereschicht vor Aufquellen geschützt werden und behält dadurch ihre Sauerstoffbarrierefunktion.

Für die Herstellung der Deckelfolie wird das Papier mithilfe eines vorzugsweise biologisch abbaubaren Kaschierklebers gegen mindestens eine Schicht aus einem Vlies, das aus einem biologisch abbaubaren Material hergestellt ist, laminiert.

Es wird ein biologisch abbaubarer Kaschierkleber eingesetzt, der lebensmittelverträglich ist. Beispiele sind wässrige Lösungen von Polyvinylalkohol (PVOH), auf Basis von Stärke, Eiweißkleber, etc.

Abgesehen von Wasser können auch andere geeignete Lösungsmittel wie z. B. Ethanol oder Mischungen davon eingesetzt werden.

Ein weiterer geeigneter biologisch abbaubarer Klebstoff ist der wasserbasierte Klebstoff Epotal^{®} Eco der Firma BASF.

Die Schichten werden zusammen mit dem Kaschierkleber laminiert und verklebt.

Generell kann die erfindungsgemäße Deckelfolie nicht nur zum Verschließen von biologisch abbaubaren Behältnissen eingesetzt werden, sondern auch für Behältnisse aus nicht oder nur begrenzt biologisch abbaubaren Materialien.

Aus Umweltgründen und zur Müllvermeidung wird sie jedoch bevorzugt in Verbindung mit biologisch abbaubaren Behältnissen eingesetzt, so dass beides, Grundkörper und Deckelfolie, durch biologischen Abbau entsorgt werden können.

Zum Verschließen des Behältnisses wird die Deckelfolie mit der Vliesschicht nach unten auf die Öffnung des Behältnisses aufgelegt und auf an sich bekannte Art und Weise versiegelt.

Auch die Art des becherartigen Behältnisses ist nicht begrenzt.

Als besonders vorteilhaft hat sich jedoch die erfindungsgemäße Deckelfolie als Deckelfolie für Getränkekapseln, wie Kaffeekapseln erwiesen. Anders als die herkömmlichen Deckelfolien aus Aluminium reißt sie während des Brühvorgangs auf, ohne dass sich störende Splitter bilden. Ein weiterer Vorteil ist, dass die Vliesschicht wie ein Filter wirkt, der nicht gelöste Feststoffteilchen zurückhält.

Vorteilhafterweise kann die erfindungsgemäße Deckelfolie für die bekannten Getränkekapseln aus biologisch abbaubaren Kunststoffen eingesetzt werden.

In diesem Fall ist die gesamte Getränkekapsel biologisch abbaubar und kann z. B. kompostiert werden.

Beispiele sind biologisch abbaubare Getränkekapseln wie sie in WO 2015/121489 A1 der Ritter GmbH oder in DE 20 2016 104 950 U1 von Francesco Spignesi beschrieben sind.

Kapseln für Getränke aus biologisch abbaubaren Kunststoff können mittels der in der Kunststofftechnik üblichen Verfahren hergestellt werden, wie z. B. durch Tiefziehen oder im Spritzgussverfahren.

Zum Versiegeln wird die Deckelfolie mit der Vliesschicht auf die Öffnung der Kapsel aufgelegt. Die Versiegelung kann mittels Druck erfolgen, wobei die Vliesschicht als Siegelschicht dient, alternativ oder zusätzlich kann der Rand der Kapsel selbst mit einem Siegelmedium versehen sein. Weiter kann die Versiegelung mittels eines Klebers erfolgen, insbesondere eines biologisch abbaubaren Klebers. Derartige Versiegelungsverfahren sind an sich bekannt und einem Fachmann geläufig.

Nachstehend wird die vorliegende Erfindung anhand eines speziellen Ausführungsbeispiels näher erläutert.

Die Deckelfolie weist eine Papierschicht auf, die mit einem biologisch abbaubaren Kaschierkleber mit einer oder mehreren Schichten aus einem Vlies aus einem biologisch abbaubaren Kunststoff verbunden ist. Als biologisch abbaubarer Kaschierklebstoff kann ein Kleber auf Stärkebasis eingesetzt werden.

Die mindestens eine Vliesschicht ist vorzugsweise gebildet aus Polylactid oder einem Polylactid-Copolymer oder einer Mischung davon.

Die Papierschicht weist Barrierefunktionen gegen Sauerstoff und Wasserdampf auf.

Hierzu kann die freie Oberfläche der Papierschicht mit einem Barriere-Kunststoff mit entsprechender Barrierefunktion gegen Sauerstoff und Wasserdampf beschichtet sein. Gemäß einer weiteren bevorzugten Ausführungsform kann das Papier vorzugsweise durch Hochdruckverpressen der Papierfasern eine Sauerstoffbarriere und/oder Wasserdampfbarriere ausbilden. Die freie Oberfläche der Papierschicht kann zusätzlich mit einer Wasserdampfbarriereschicht oder Sauerstoffbarriereschicht geschützt werden. Diese Wasserdampfbarriereschicht schützt ebenfalls vor Feuchtigkeit.

Die vorstehend erhaltene Deckelfolie wird mit der Vliesschicht nach unten auf die Öffnung einer Getränkekapsel aus einem biologisch abbaubaren Kunststoff aufgesetzt und Deckelfolie und Kapsel miteinander versiegelt.

In die Getränkekapsel ist vor dem Versiegeln z. B. Kaffeepulver eingefüllt worden.

Die so erhaltene mit Deckelfolie versehene Getränkekapsel ist vollständig biologisch abbaubar und kann nach dem Brühvorgang auf einfache Art und Weise, z. B. durch Kompostierung, entsorgt werden.

## Patentansprüche

1. Biologisch abbaubare Deckelfolie für becherartige Behältnisse, **wobei** die biologisch abbaubare Deckelfolie in dieser Reihenfolge
i.) eine Schicht aus Papier, wobei die freie Oberseite und/oder Unterseite der Schicht aus Papier eine Barriereschicht für Sauerstoff und Wasserdampf aufweist, oder wobei die Schicht aus Papier eine Barrierefunktion aufweist;
ii.) und mindestens eine Schicht aus einem Vlies ist, wobei das Vlies aus einem biologisch abbaubaren Material hergestellt ist, und,
**wobei** das biologisch abbaubare Material ein Kunststoff ist,
**wobei** die Deckelfolie mit einer Barrierefunktion für Sauerstoff und Wasserdampf ausgerüstet ist.

2. Biologisch abbaubare Deckelfolie nach Anspruch 1,
**wobei** das biologisch abbaubare Material Polylactid oder ein biologisch abbaubares Material auf Polylactidbasis ist.

3. Biologisch abbaubare Deckelfolie nach einem der vorhergehenden Ansprüche,
**wobei** das biologisch abbaubare Material ein Polylactid-Copolymer ist.

4. Biologisch abbaubare Deckelfolie nach Anspruch 3, wobei das Copolymer Polyester, insbesondere aliphatischer Polyester ist, oder das Copolymer Poly-(Lactid-co-Glykolid) ist.

5. Biologisch abbaubare Deckelfolie nach einem der Ansprüche 1 bis 4,
**wobei** die Schicht aus Papier Sauerstoffbarrierefunktion aufweist.

6. Biologisch abbaubare Deckelfolie nach einem der vorhergehenden Ansprüche,
**wobei** das Papier mithilfe eines biologisch abbaubaren Kaschierklebers gegen mindestens eine Schicht aus einem Vlies, das aus einem biologisch abbaubaren Material hergestellt ist, laminiert ist.

7. Biologisch abbaubare Deckelfolie nach einem der vorhergehenden Ansprüche,
**wobei** der biologisch abbaubare Kaschierkleber ausgewählt ist unter einem Kleber auf Basis von Polyvinylalkohol, Stärke oder einem Eiweißkleber.

8. Biologisch abbaubare Deckelfolie nach einem der vorhergehenden Ansprüche,
**wobei** das becherartige Behältnis eine Kapsel, Schale oder schüsselartiges Behältnis aus einem biologisch abbaubaren Kunststoff ist.

9. Biologisch abbaubare Deckelfolie nach einem der vorhergehenden Ansprüche,
**wobei** das becherartige Behältnis eine Getränkekapsel ist.

10. Getränkekapsel aus einem biologisch abbaubaren Material mit einer Deckelfolie nach einem der Ansprüche 1 bis 10.

## Claims

1. A biodegradable cover film for cup-like receptacles,
wherein the biodegradable cover film comprises, in this order:
i.) a layer made of paper, the exposed top side and/or bottom side of the layer made of paper comprising a barrier layer for oxygen and water vapor, or the layer made of paper having a barrier function;
ii.) and at least one layer made of a nonwoven fabric, the nonwoven fabric being produced from a biodegradable material, and the biodegradable material being a plastic, wherein the cover film is furnished with a barrier function for oxygen and water vapor.

2. The biodegradable cover film according to claim 1,
wherein the biodegradable material is polylactide or a polylactide-based biodegradable material.

3. The biodegradable cover film according to any one of the preceding claims,
wherein the biodegradable material is a polylactide copolymer.

4. The biodegradable cover film according to claim 3, wherein the copolymer is polyester, and in particular aliphatic polyester, or the copolymer is poly(lactide-co-glycolide).

5. The biodegradable cover film according to any one of claims 1 to 4,
wherein the layer made of paper has an oxygen barrier function.

6. The biodegradable cover film according to any one of the preceding claims,
wherein the paper is laminated to at least one layer made of a nonwoven fabric, which is produced from a biodegradable material, using a biodegradable laminating adhesive.

7. The biodegradable cover film according to any one of the preceding claims,
wherein the biodegradable laminating adhesive is selected from an adhesive based on polyvinyl alcohol, starch, or a protein adhesive.

8. The biodegradable cover film according to any one of the preceding claims,
wherein the cup-shaped receptacle is a capsule, dish, or bowl-shaped receptacle made of a biodegradable plastic.

9. The biodegradable cover film according to any one of the preceding claims,
wherein the cup-like receptacle is a beverage capsule.

10. A beverage capsule made of a biodegradable material comprising a cover film according to any one of claims 1 to 10.

## Revendications

1. Film de revêtement biodégradable pour des réceptacles en forme de tasse,
dans lequel le film de revêtement biodégradable comprend, dans cet ordre :
i.) une couche fabriquée en papier, le côté supérieur et/ou côté inférieur exposé de la couche fabriquée en papier comprenant une couche barrière vis-à-vis de l'oxygène et de la vapeur d'eau, ou la couche fabriquée en papier ayant une fonction barrière ;
ii.) et au moins une couche fabriquée en un tissu intissé, le tissu intissé étant produit à partir d'un matériau biodégradable, et le matériau biodégradable étant un plastique, dans lequel le film de revêtement est pourvu d'une fonction barrière vis-à-vis de l'oxygène et de la vapeur d'eau.

2. Film de revêtement biodégradable selon la revendication 1,
dans lequel le matériau biodégradable est le polylactide ou un matériau biodégradable à base de polylactide.

3. Film de revêtement biodégradable selon l'une quelconque des revendications précédentes,
dans lequel le matériau biodégradable est un copolymère de polylactide.

4. Film de revêtement biodégradable selon la revendication 3, dans lequel le copolymère est le polyester, et en particulier un polyester aliphatique, ou le copolymère est le poly(lactide-co-glycolide).

5. Film de revêtement biodégradable selon l'une quelconque des revendications 1 à 4, dans lequel la couche fabriquée en papier a une fonction barrière vis-à-vis de l'oxygène.

6. Film de revêtement biodégradable selon l'une quelconque des revendications précédentes,
dans lequel le papier est stratifié sur au moins une couche fabriquée en un tissu intissé, qui est produit à partir d'un matériau biodégradable, en utilisant un adhésif de stratification biodégradable.

7. Film de revêtement biodégradable selon l'une quelconque des revendications précédentes,
dans lequel l'adhésif de stratification biodégradable est choisi parmi un adhésif basé sur l'alcool polyvinylique, l'amidon ou un adhésif à base de protéine.

8. Film de revêtement biodégradable selon l'une quelconque des revendications précédentes,
dans lequel le réceptacle en forme de tasse est un réceptacle en forme de capsule, de soucoupe ou de bol fabriqué en un plastique biodégradable.

9. Film de revêtement biodégradable selon l'une quelconque des revendications précédentes,
dans lequel le réceptacle en forme de tasse est une capsule de boisson.

10. Capsule de boisson fabriquée en un matériau biodégradable comprenant un film de revêtement selon l'une quelconque des revendications 1 à 10.
